# EUROPEAN PATENT APPLICATION

(11) **EP 3 726 621 A1**
(43) Date of publication of application: **21.10.2020**
(21) Application number: 18887351.7
(22) Date of filing: 13.12.2018
(51) Int. Cl.: H01M 2/26

(54) **BATTERY, BATTERY PACK PROVIDED WITH SAME AND ELECTRIC VEHICLE**

(30) Priority: 14.12.2017 CN 201721749700 U
(71) Applicant: BYD Company Limited, Shenzhen, Guangdong 518118 (CN)
(72) Inventor: LIU, Yanchu, Shenzhen, Guangdong 518118 (CN); YAO, Bin, Shenzhen, Guangdong 518118 (CN); YANG, Chao, Shenzhen, Guangdong 518118 (CN); GONG, Xubin, Shenzhen, Guangdong 518118 (CN); ZHANG, Yong, Shenzhen, Guangdong 518118 (CN)
(74) Representative: Haseltine Lake Kempner LLP
(86) International application number: PCT/CN2018/120788
(87) International publication number: WO 2019/114781

(57) **Abstract**

A battery (100), a battery pack having the same, and an electric vehicle are provided. The battery (100) includes: a housing; a cover plate (30) at an end of the housing, the cover plate (30) having a first side region (301) and a second side region (302) arranged in a lateral direction or a longitudinal direction of the cover plate; a terminal (40) disposed on the cover plate (30), a part of the terminal (40) being located in the first side region (301) and another part being located in the second side region (302); a first pole core (10) and a second pole core (20) located in the housing, the first pole core (10) corresponding to a position of the first side region (301), the first pole core (10) having a first tab (11), at least one part of the first tab (11) extending in a direction from the first side region (301) to the second side region (302) and being connected to a part of the terminal (40), the second pole core (20) corresponding to a position of the second side region (301), the second pole core (20) having a second tab (21), at least one part of the second tab (21) extending in a direction from the second side region (302) to the first side region (301) and being connected to at least another part of the terminal (40).

## Description

### FIELD

The present disclosure relates to the technical field of electric vehicles, and in particular, to a battery, a battery pack having the same, and an electric vehicle.

### BACKGROUND

A lithium ion battery tab includes a positive pole tab and a negative pole tab. The positive pole tab and the negative pole tab are composed of a plurality of layers of extremely thin copper foil or aluminium foil in a laminated manner. In the related art, a connecting piece structure is usually added between the tab and a terminal of a cover plate, one end of a connecting piece is connected to the tab first, and the other end of the connecting piece is then connected to the cover plate. The positive pole tab is connected to a positive pole connecting piece, and the negative pole tab is connected to a negative pole connecting piece, the positive pole connecting piece being then connected to a corresponding positive terminal on the cover plate, and the negative pole connecting piece being then connected to a corresponding negative terminal on the cover plate. A two-step welding process is required to connect, to the cover plate, the tabs connected through this connection method. Therefore, the assembly process is relatively complicated, and internal resistance of the battery and other risks are increased due to welding for a plurality of times. In addition, the pole core of the battery and the cover plate can only be connected in a one-to-one correspondence, and then the assembled battery is connected in parallel or in series to change capacitance or a voltage of the battery pack. The structure is complicated, and the battery pack has a relatively large volume.

### SUMMARY

The present disclosure is intended to resolve at least one of the technical problems existing in the prior art. To this end, the present disclosure provides a battery. The battery assembly process is simpler and can meet more use requirements.

The present disclosure further provides a battery pack having the foregoing battery.

The present disclosure further provides an electric vehicle having the foregoing battery pack.

The battery according to embodiments of the present disclosure includes: a housing; a cover plate located at an end of the housing; the cover plate having a first side region and a second side region arranged in a lateral direction or a longitudinal direction of the cover plate; a terminal disposed on the cover plate, a part of the terminal being located in the first side region, and another part being located in the second side region; a first pole core located in the housing, the first pole core corresponding to a position of the first side region, the first pole core having a first tab, and at least one part of the first tab extending in a direction from the first side region to the second side region and being connected to at least one part of the terminal; and a second pole core located in the housing, the second pole core corresponding to a position of the second side region, the second pole core having a second tab, and at least one part of the second tab extending in a direction from the second side region to the first side region and being connected to at least another part of the terminal.

The battery according to the embodiment of the present disclosure can meet more use requirements, has a smaller volume and stronger practicability, and can omit the connecting piece structure. The connecting structure is firmer, and the assembly process is simpler, so that production costs are reduced, and the internal resistance is reduced, facilitating improvement of the market competitiveness of the battery.

In addition, the battery according to the embodiments of the present disclosure may further have the following additional technical features.

According to the battery in the embodiments of the present disclosure, the terminal includes: a plate-like body disposed on a surface that is of the cover plate and that faces the first pole core and the second pole core, one part of the plate-like body being located in the first side region, another part being located in the second side region, the first tab being connected to at least one part of the plate-like body, and the second tab being connected to at least another part of the plate-like body; and a columnar body connected to the plate-like body and passing through the cover plate to protrude from a surface that is of the cover plate and that faces away from the first pole core and the second pole core.

In some embodiments of the present disclosure, the first side region and the second side region are arranged along the lateral direction of the cover plate and are delimited by a lateral center line of the cover plate, and the plate-like body is evenly distributed in the first side region and the second side region.

In some embodiments of the present disclosure, a surface that is of the plate-like body and that faces the first pole core and the second pole core constitutes a mounting plane, at least one part of the first tab being parallel to the mounting plane and connected to the mounting plane, and at least one part of the second tab being parallel to the mounting plane and connected to the mounting plane.

In some embodiments of the present disclosure, the first tab includes: a first connecting portion extending from the first pole core in a direction away from the second pole core; a first bending portion connected to the first connecting portion and bending in a direction of the second pole core; and a first mounting portion connected to the first bending portion and extending in the direction of the second pole core, the first mounting portion being parallel to the mounting plane and connected to the mounting plane.

In some embodiments of the present disclosure, the second tab includes: a second connecting portion extending from the second pole core in a direction away from the first pole core; a second bending portion connected to the second connecting portion and bending in a direction of the first pole core; and a second mounting portion connected to the second bending portion and extending in the direction of the first pole core, the second mounting portion being parallel to the mounting plane and connected to the mounting plane.

In some embodiments of the present disclosure, the at least one part of the first tab and the at least one part of the second tab are arranged integrally, at intervals, against each other, or in an overlapped manner.

In some embodiments of the present disclosure, the at least one part of the first tab and the terminal are connected in any of manners such as laser welding, ultrasonic welding, and riveting.

In some embodiments of the present disclosure, the at least one part of the second tab and the terminal are connected in any of manners such as laser welding, ultrasonic welding, and riveting.

According to some embodiments of the present disclosure, the first pole core has two first tabs disposed at intervals along a length direction of the first pole core: a first positive tab and a first negative tab, the second pole core has two second tabs disposed at intervals along a length direction of the second pole core: a second positive tab and a second negative tab, and there are two terminals: a positive terminal and a negative terminal, the first positive tab and the second positive tab being connected to the positive terminal, and the first negative tab and the second negative tab being connected to the negative terminal.

The battery pack according to the embodiments of the present disclosure includes the battery according to the embodiment of the present disclosure.

The electric vehicle according to the embodiments of the present disclosure includes the battery pack according to the embodiment of the present disclosure.

Other aspects and advantages of the present disclosure will be given in the following description, some of which will become apparent from the following description or may be learned from practices of the present disclosure.

### BRIEF DESCRIPTION OF THE DRAWINGS

The foregoing and/or additional aspects and advantages of the present disclosure will become apparent and comprehensible in the description made with reference to the following accompanying drawings, where:
FIG. 1 is a schematic diagram of a connection structure of a battery in a state according to an embodiment of the present disclosure.
FIG. 2 is a schematic diagram of a connection structure of a battery in another state according to an embodiment of the present disclosure.
FIG. 3 is a schematic structural diagram of a battery according to an embodiment of the present disclosure.
FIG. 4 is a schematic structural diagram of a battery according to another embodiment of the present disclosure.
FIG. 5 is a schematic structural diagram of a battery according to still another embodiment of the present disclosure.
FIG. 6 is a schematic diagram of a connection structure of a cover plate and a terminal of a battery according to an embodiment of the present disclosure.

### Reference numerals:

Battery 100;
First pole core 10; First tab 11; First connecting portion 111; First bending portion 112; First mounting portion 113; First positive tab 12; First negative tab 13;
Second pole core 20; Second tab 21; Second connecting portion 211; Second bending portion 212; Second mounting portion 213; Second positive tab 22; Second negative tab 23;
Cover plate 30; First side region 301; Second side region 302;
Terminal 40; Mounting plane 401; Plate-like body 402; Columnar body 403; Positive terminal 41; Negative terminal 42;
Protective sheet 50; Pre-welding region 51.

### DETAILED DESCRIPTION

Embodiments of the present disclosure are described in detail below, and examples of the embodiments are shown in the accompanying drawings. The embodiments described below with reference to the accompanying drawings are exemplary and used for explaining the present disclosure, and should not be construed as a limitation on the present disclosure. Persons of ordinary skill in the art may make various changes, modifications, replacements and variations to the embodiments without departing from the principles and spirit of the present disclosure, and the scope of the present disclosure is as defined by the appended claims and their equivalents.

In the description of the present disclosure, it should be understood that orientation or position relationships indicated by the terms such as "length", "width", "thickness", "top", "bottom", "front", "back", "left", and "right" are based on orientation or position relationships shown in the accompanying drawings, and are used only for ease and brevity of illustration and description, rather than indicating or implying that the mentioned apparatus or component must have a particular orientation or must be constructed and operated in a particular orientation. Therefore, such terms should not be construed as limiting of the present disclosure.

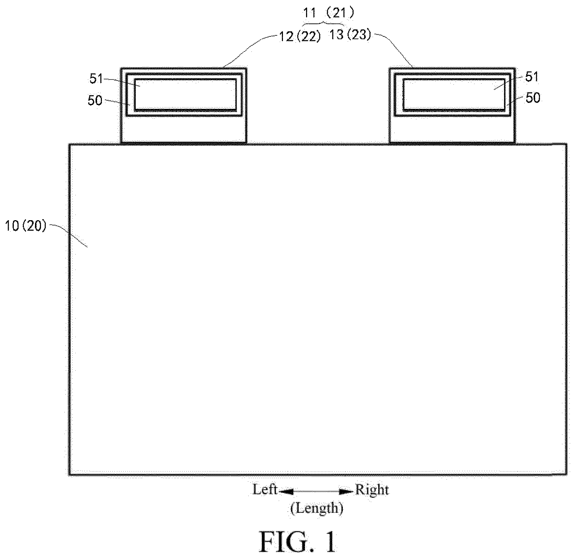

A battery 100 according to the embodiments of the present disclosure is described below with reference to FIG. 1 to FIG. 6.

With reference to FIG. 1 to FIG. 6, the battery 100 according to the embodiments of the present disclosure may include: a housing (not shown in the figure), a cover plate 30, a terminal 40, a first pole core 10, and a second pole core 20.

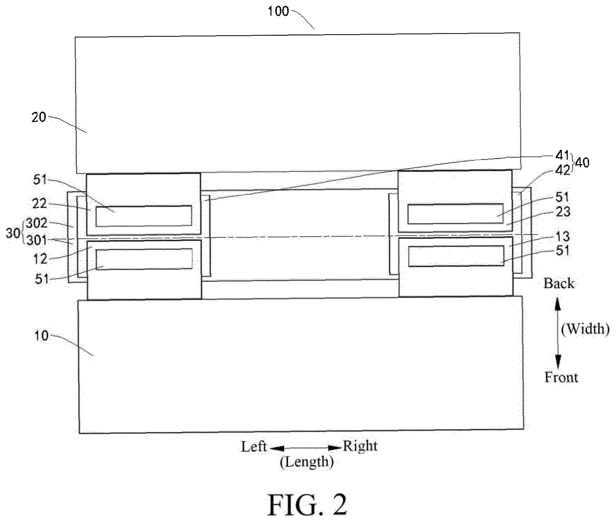

In some embodiments of the present disclosure, the cover plate 30 may be located at an end of the housing, and have a first side region 301 and a second side region 302. The first side region 301 and the second side region 302 may be arranged along a lateral direction of the cover plate 30, or may be arranged along a longitudinal direction of the cover plate 30. The lateral direction of the cover plate 30 herein may be understood as a front-back direction as shown in FIG. 2, that is, a width direction of the cover plate 30, and the longitudinal direction of the cover plate 30 may be understood as a left-right direction as shown in FIG. 2, that is, a length direction of the cover plate 30.

The terminal 40 may be disposed on the cover plate 30, one part of the terminal 40 may be located in the first side region 301, and another part of the terminal 40 may be located in the second side region 302. In other words, the terminal 40 spans the first side region 301 and the second side region 302 of the cover plate 30.

It may be understood by those skilled in the art that the first side region 301 and the second side region 302 are both spatial regions. In other words, one part of the cover plate 30 is referred to as the first side region 301, and another part of the cover plate 30 is referred to as the second side region 302.

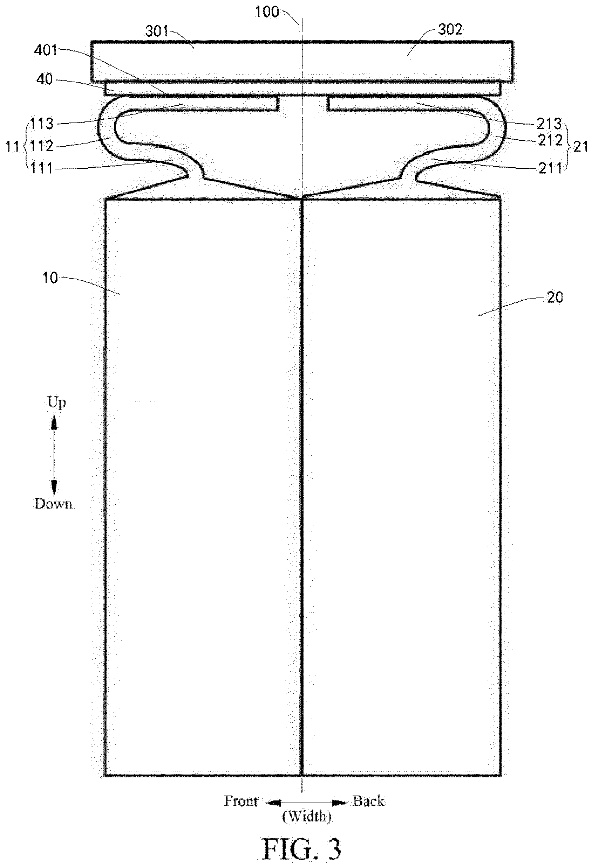

The first pole core 10 and the second pole core 20 may be located inside the housing. As shown in FIG. 3, the first pole core 10 may correspond to a position of the first side region 301, and the second pole core 20 may correspond to a position of the second side region 302. In addition, the first pole core 10 may have a first tab 11, the first tab 11 may extend along a direction from the first side region 301 to the second side region 302, and the first tab 11 is connected to at least one part of the terminal 40, to implement the connection between the first pole core 10 and the terminal 40. The second pole core 20 may have a second tab 21, the second tab 21 may extend along a direction from the second side region 302 to the first side region 301, and the second tab 21 is connected to at least another part of the terminal 40, to implement the connection between the second pole core 20 and the terminal 40.

It should be noted that the first tab 11 may partially extend along the direction from the first side region 301 to the second side region 302, or may entirely extend along the direction from the first side region 301 to the second side region 302. The second tab 21 may partially extend along the direction from the second side region 302 to the first side region 301, or may entirely extend along the direction from the second side region 302 to the first side region 301. In other words, at least one part of the first tab 11 may extend along the direction from the first side region 301 to the second side region 302, and at least one part of the second tab 21 may extend along the direction from the second side region 302 to the first side region 301, which are all within the protection scope of the present disclosure.

The tabs of a lithium ion battery are composed of a plurality of layers of thin aluminium foil or copper foil in a laminated manner. Due to factors such as a thickness, a size, a shape of the tab, and a shape of the terminal on the cover plate, it is difficult for the tab to be directly connected to the terminal corresponding to the cover plate. In the related art, a connecting piece structure is usually added between the tab and the terminal on the cover plate, one end of a connecting piece is connected to the tab first, and another end of the connecting piece is then connected to the cover plate. A two-step welding process is required to connect, to the cover plate, the tabs connected through this connection method. In this way, the assembly process is relatively complicated, internal resistance of the battery and other risks are increased due to welding for a plurality of times, and safety performance and service life of the battery will be reduced. In addition, the pole core of the battery and the cover plate can only be connected in a one-to-one correspondence, and then the assembled battery is connected in parallel or in series to change capacitance or a voltage of the battery pack. The structure is complicated, and the battery pack has a relatively large volume.

In the present disclosure, the first tab 11 and the second tab 21 may be connected to the terminal 40 on the cover plate 30 through the connection piece, and may further be directly connected to the terminal 40 on the cover plate 30. In the assembly process of the battery 100, the connection piece structure may be omitted, so that the connection structure is simpler, thereby facilitating reduction of production costs. The first tab 11 and the second tab 21 are directly connected to the terminal 40, which can reduce a number of welding times, simplify an assembly process, and can effectively reduce internal resistance of the battery 100, so that performance of the battery 100 is better, and safety and service life of the battery 100 can be ensured.

In addition, at least one part of the first tab 11 may extend in a direction from the first side region 301 to the second side region 302, and at least one part of the second tab 21 may extend in a direction from the second side region 302 to the first side region 301. Therefore, positions of the first pole core 10 and the second pole core 20 may be more compact, which facilitates reduction of the volume of the battery 100, and the first tab 11 and the second tab 21 can be connected to the terminal 40 easily.

The first tab 11 is connected to a part or a larger area of the terminal 40, and the second tab 21 is connected to another part or a larger area of the terminal 40. In other words, the first tab 11 and the second tab 21 may be connected to the same terminal 40, so that the first pole core 10 and the second pole core 20 may be connected in parallel or in series, and the capacity or voltage of the battery 100 can be increased to meet more use requirements.

The first pole core 10 and the second pole core 20 of the battery 100 according to the embodiment of the present disclosure may be connected to the terminal 40, which can meet more use requirements. The battery has a smaller volume and stronger practicability, and the first tab 11 and the second tab 21 may be directly connected to the terminal 40, which can omit the connecting piece structure. The connecting structure is firmer, and the assembly process is simpler, so that production costs are reduced, and the internal resistance is reduced, facilitating improvement of the market competitiveness of the battery 100.

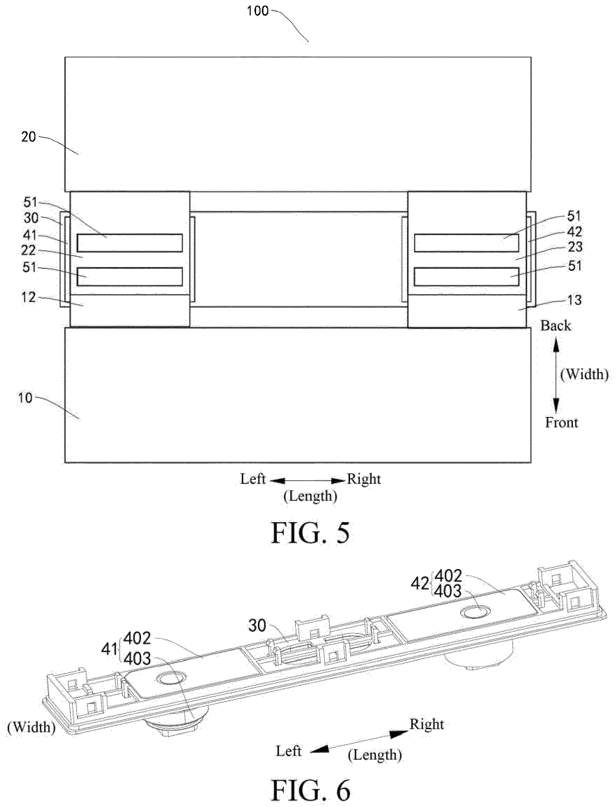

According to the battery 100 in the embodiment of the present disclosure, as shown in FIG. 3 and FIG. 6, the terminal 40 may include a plate-like body 402 and a columnar body 403.

Specifically, the plate-like body 402 may be provided on a surface that is of the cover plate 30 and that faces the first pole core 10 and the second pole core 20, a part of the plate-like body 402 may be located in the first side region 301, and another part of the plate-like body 402 may be located in the second side region 302. The first tab 11 is connected to at least one part of the plate-like body 402, and the second tab 21 is connected to at least another part of the plate-like body 402. As a result, the connection of the first tab 11 and the second tab 21 to the terminal 40 is implemented, and the connection of the first tab 11 and the second tab 21 to the terminal 40 is simple and convenient in structure.

The columnar body 403 may be connected to the plate-like body 402, and the columnar body 403 may pass through the cover plate 30 to protrude from a surface that is of the cover plate 30 and that faces away from the first pole core 11 and the second pole core 21. Therefore, the connection of the first tab 11 and the second tab 21 to the cover plate 30 is implemented, and it is convenient for the battery 100 to be applied to other devices and supply power to the other devices.

In some embodiments of the present disclosure, the plate-like body 402 and the columnar body 403 may be an integrated piece or separate pieces. In the embodiment in which the plate-like body 402 and the columnar body 403 are separate pieces, as shown in FIG. 8, during assembly, the plate-like body 402 may be disposed on one side that is of the cover plate 30 and that faces the first pole core 11 and the second pole core 21, one end of the columnar body 403 passes through the cover plate 30 from the side that is of the cover plate 30 and that faces away from the first pole core 11 and the second pole core 21, and then one end of the columnar body 403 is connected to the plate-like body 402. A connection manner may be welding, clamping, or the like.

In some embodiments of the present disclosure, as shown in FIG. 2 and FIG. 3, the first side region 301 and the second side region 302 may be arranged along the lateral direction of the cover plate 30, that is, along the width direction of the cover plate 30. In addition, the first side region 301 and the second side region 302 are delimited by the lateral center line of the cover plate 30. It may be understood that the lateral center line of the cover plate 30 is used to divide the cover plate 30 in the longitudinal direction of the cover plate 30, and extends along the lateral direction of the cover plate 30. The plate-like body 402 of the terminal 40 may constitute a platform structure. The plate-like body 402 may extend beyond one side surface of the cover plate 30, and the surface of the plate-like body 402 is flatter. The first tab 11 and the second tab 21 may be connected to an end face of one side surface of the plate-like body 402, so that it can be ensured that the operation is more convenient when the first tab 11 and the second tab 21 are connected to an end face of the terminal 40.

In addition, the plate-like body 402 of the terminal 40 may be evenly distributed in the first side region 301 and the second side region 302. In other words, a center line in the width direction of the cover plate 30 and a center line of the terminal 40 may overlap, so that the connection structure may be symmetrically distributed, which facilitates improvement of the stability of the connection structure.

According to the battery 100 of the embodiment of the present disclosure, the method in which the terminal 40 is respectively connected to the first tab 11 and the second tab 21 is not particularly limited. In some embodiments of the present disclosure, the terminal 40 may be respectively connected to the first tab 11 and the second tab 21 through laser welding, ultrasonic welding, riveting, or the like, which are all within the protection scope of the present disclosure, and it is only necessary to meet the requirements for firm connection of the terminal 40 to the first tab 11 and the second tab 21.

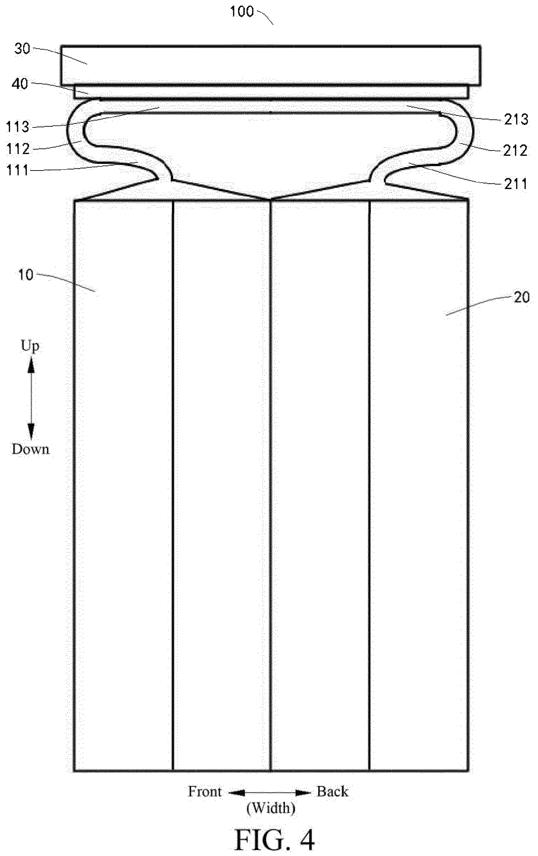

In some embodiments of the present disclosure, as shown in FIG. 3 and FIG. 4, the surface that is of the plate-like body 402 and that faces the first pole core 10 and the second pole core 20 may constitute a mounting plane 401. A part that is of the first tab 11 and that is connected to the plate-like body 402 may be parallel to the mounting plane 401 and connected to the mounting plane 401, and a part that is of the second tab 21 and that is connected to the plate-like body 402 may be parallel to the mounting plane 401 and connected to the mounting plane 401. Therefore, the plate-like body 402 of the terminal 40 may be connected to the first tab 11 and the second tab 21 in face-to-face contact, so that the connection area is larger, and the connection structure is firmer.

In some embodiments of the present disclosure, as shown in FIG. 3 and FIG. 4, the first tab 11 and the second tab 21 may be bent.

The first tab 11 may include: a first connecting portion 111, a first bending portion 112, and a first mounting portion 113. The first connecting portion 111 may extend from the first pole core 10 in a direction away from the second pole core 20, the first bending portion 112 may be connected to the first connecting portion 111, and the first bending portion 112 may be bent in the direction of the second pole core 20. The first mounting portion 113 may be connected to the first bending portion 112, the first mounting portion 113 extends in the direction of the second pole core 20, and the first mounting portion 113 may be formed into a part parallel to the mounting plane 401 and connected to the mounting plane 401. In other words, the first connecting portion 111 is connected to the first pole core 10, the first mounting portion 113 is connected to the mounting plane 401, and the first connecting portion 111, the first bending portion 112, and the first mounting portion 113 are connected in sequence, to implement the connection of the first pole core 10 to the terminal 40.

The second tab 21 may include: a second connecting portion 211, a second bending portion 212, and a second mounting portion 213. The second connecting portion 211 may extend from the second pole core 20 in a direction away from the first pole core 10, the second bending portion 212 may be connected to the second connecting portion 211, and the second bending portion 212 may be bent in the direction of the first pole core 10. The second mounting portion 213 may be connected to the second bending portion 212, the second mounting portion 213 extends in the direction of the first pole core 10, and the second mounting portion 213 may be formed into a part parallel to the mounting plane 401 and connected to the mounting plane 401. In other words, the second connecting portion 211 is connected to the second pole core 20, the second mounting portion 213 is connected to the mounting plane 401, and the second connecting portion 211, the second bending portion 212, and the second mounting portion 213 are connected in sequence, to implement the connection of the second pole core 20 to the terminal 40.

In the manufacturing process, as shown in FIG. 1, one end of the first tab 11 and one end of the second tab 21 may be first connected to the first pole core 10 and the second pole core 20, respectively. As shown in FIG. 2, the other end of the first tab 11 and the other end of the second tab 21 are then connected to the terminal 40, respectively. As shown in FIG. 3, the first tab 11 and the second tab 21 are finally bent, so that the first tab 11 forms the first connecting portion 111, the first bending portion 112, and the first mounting portion 113. The second tab 21 forms a second connecting portion 211, a second bending portion 212, and a second mounting portion 213. In this case, the first pole core 10 and the second pole core 20 may be connected together, so that the volume of the battery 100 is smaller, the structure is more compact, and the connection between the first pole core 10 and the second pole core 20 is more convenient and efficient.

In some embodiments of the present disclosure, as shown in FIG. 3 and FIG. 4, the first tab 11 and the second tab 21 may be an integrated piece, respectively. In other words, the first connecting portion 111, the first bending portion 112, and the first mounting portion 113 may be integrally formed, the second connecting portion 211, the second bending portion 212, and the second mounting portion 213 may be integrally formed, and the first tab 11 and the second tab 21 may be integrally wound or formed by aluminium foil or copper foil in a laminated manner. In this way, an intermediate connection structure is avoided, facilitating reduction of internal resistance of the battery 100 without needing assembly, thereby reducing production steps, and simplifying a manufacturing process, so that production costs are reduced.

In the present disclosure, the manner in which the part that is of the first tab 11 and that is connected to the terminal 40 and the part that is of the second tab 21 and that is connected to the terminal 40 are disposed may be flexibly set according to actual needs. The two parts may be disposed at intervals, disposed integrally, disposed against each other, or may be formed with an overlapping region.

For example, as shown in FIG. 2 and FIG. 3, in some embodiments of the present disclosure, the part that is of the first tab 11 and that is connected to the terminal 40 and the part that is of the second tab 21 and that is connected to the terminal 40 may be disposed at intervals on both sides of the center line of the terminal 40, and the first tab 11 and the second tab 21 may be connected to the terminal 40, respectively.

For example, in some other embodiments of the present disclosure, as shown in FIG. 4, the part that is of the first tab 11 and that is connected to the terminal 40 and the part that is of the second tab 21 and that is connected to the terminal 40 may be integrally formed, and the center line is located on the center line of the terminal 40. Alternatively, the part that is of the first tab 11 and that is connected to the terminal 40 and the part that is of the second tab 21 and that is connected to the terminal 40 may be disposed against each other, for example, disposed in a butted manner or connected in a butted manner, and the butted center line is located on the center line of the terminal 40. In this case, the first tab 11 and the second tab 21 may be connected first and then connected to the terminal 40.

For example, in some other embodiments of the present disclosure, as shown in FIG. 5, the part that is of the first tab 11 and that is connected to the terminal 40 and the part that is of the second tab 21 and that is connected to the terminal 40 may be formed with an overlapping region. In some embodiments of the present disclosure, the center line of the terminal 40 may pass through the overlapping region.

The embodiments in which the part that is of the first tab 11 and that is connected to the terminal 40 and the part that is of the second tab 21 and that is connected to the terminal 40 are respectively disposed in different manners can meet the requirements for firm connection of the first tab 11 and the second tab 21 to the terminal 40, which are all within the protection scope of the present disclosure.

According to some embodiments of the present disclosure, as shown in FIG. 1 and FIG. 2, the first tab 11 and the second tab 21 may be provided with a pre-welding region 51, and the terminal 40 may be connected to the pre-welding region 51, so that the connection between the first tab 11 and the second tab 21 and the terminal 40 is more secure and reliable.

It should be noted that, as shown in the specific embodiment in FIG. 1, the first tab 11 and the second tab 21 are laminated together by a plurality of layers of aluminium/copper foil, then a protective sheet 50 is added, and the plurality of layers of aluminium/copper foil are pre-welded together at the center of the protective sheet 50. A welding region at the center of the protective sheet 50 is the pre-welding region 51. In one aspect, the pre-welding may cause the first tab 11 and the second tab 21 to be formed into a whole, to facilitate the connection between the first tab 11 and the second tab 21 and the terminal 40. In another aspect, a surface of the pre-welding region 51 of the first tab 11 and the second tab 21 is flatter, and when the terminal 40 is connected to the pre-welding region 51, the connection may be more secure, and the operation is more convenient.

The pre-welding method herein may be laser welding, ultrasonic welding, and the like. The protective sheet 50 may be an aluminium sheet or a copper sheet with a certain thickness, as long as it meets the requirement for the plurality of foil layers to be pre-welded into a whole.

In some embodiments of the present disclosure, as shown in FIG. 2 and FIG. 3, an edge of the terminal 40 is not connected to the first tab 11 and the second tab 21. In other words, a connection region between the terminal 40 and the first tab 11 and the second tab 21 is at a certain distance from the edge of the terminal 40. For example, in the embodiment in which the terminal 40 is connected to the pre-welding region 51 on the first tab 11 and the second tab 21, the pre-welding region 51 may be at a certain distance from the edge of the terminal 40, which can ensure that the terminal 40 is firmly connected to the first tab 11 and the second tab 21, and the edge of the connection region is not easy to crack.

According to some embodiments of the present disclosure, as shown in FIG. 1 and FIG. 2, the first pole core 10 may include two first tabs 11: a first positive tab 12 and a first negative tab 13, and the second pole core 20 may include two second tabs 21: a second positive tab 22 and a second negative tab 23. The first positive tab 12 and the first negative tab 13 may be disposed at intervals along a length direction of the first pole core 10, that is, a length direction of the cover plate 30, and the second positive tab 22 and the second negative tab 23 may be disposed at intervals along a length direction of the second pole core 20, that is, the length direction of the cover plate 30.

The terminal 40 may include a positive terminal 41 and a negative terminal 42. The first positive tab 12 and the second positive tab 22 may be connected to the positive terminal 41, and the first negative tab 13 and the second negative tab 23 may be connected to the negative terminal 42. Therefore, both a positive connection sheet for connecting a positive tab to a positive terminal in the related art and a negative connection sheet for connecting a negative tab to a negative terminal in the related art are omitted, thereby further simplifying an assembly process, reducing production costs, and reducing internal resistance of the battery 100.

In addition, it should be noted that, in the present disclosure, the manner in which a part that is of the first positive tab 12 and that is connected to the terminal 40 and a part that is of the second positive tab 22 and that is connected to the terminal 40 may be the same or different from the manner in which a part that is of the first negative tab 13 and that is connected to the terminal 40 and a part that is of the second negative tab 23 and that is connected to the terminal 40. In other words, the part that is of the first positive tab 12 of the battery 100 and that is connected to the terminal 40 and the part that is of the second positive tab 22 and that is connected to the terminal 40 and the part that is of the first negative tab 13 and that is connected to the terminal 40 and the part that is of the second negative tab 23 and that is connected to the terminal 40 may be disposed in one or two manners such as an integrated manner, at intervals, against each other, or an overlapped manner.

For example, in some embodiments of the present disclosure that are not shown, the part that is of the first positive tab 12 and that is connected to the terminal 40 and the part that is of the second positive tab 22 and that is connected to the terminal 40 may be disposed at intervals on both sides of the center line of the terminal 40, and the part that is of the first negative tab 13 and that is connected to the terminal 40 and the part that is of the second positive tab 23 and that is connected to the terminal 40 may be disposed integrally, the center line being located on the center line of the terminal 40.

The battery 100 according to further embodiments of the present disclosure includes, but is not limited to, the first pole core 10 and the second pole core 20, and may further include more pole cores. Two adjacent pole cores may constitute a pair, and a plurality of pole cores may include at least one pair of pole cores, the two tabs of each pair of pole cores may be connected to each other, and the two tabs connected to each other may be connected to the terminal 40. In the manufacturing process of the battery 100, a plurality of pole cores may be connected in pairs to form a plurality of pairs of pole cores, and then the tabs of the plurality of pairs of pole cores may be pre-connected, and finally the pre-connected tabs are directly connected to the terminal 40, to implement the connection of the plurality of pole cores, so that the connection structure between the plurality of pole cores and the terminal 40 is simpler.

In some embodiments of the present disclosure, the battery 100 according to the embodiments of the present disclosure may be a lithium-ion battery, or the like, which are all within the protection scope of the present disclosure.

The battery 100 according to a specific embodiment of the present disclosure is described in detail below with reference to the accompanying drawings. It should be noted that the following description is only an exemplary description and cannot be understood as a limitation to the utility model.

As shown in FIG. 1 to FIG. 3, the battery 100 includes a first pole core 10, a second pole core 20, a first positive tab 12, a second positive tab 22, a first negative tab 13, a second negative tab 23, a cover plate 30, and a protective sheet 50. A positive terminal 41 and a negative terminal 42 are provided at both ends of the cover plate 30 in the length direction.

An assembly process of the battery 100 is as follows.

First, the first positive tab 12 and the second positive tab 22 are laminated together by a plurality of layers of aluminium foils after being wound or laminated, and the first negative tab 13 and the second negative tab 23 are laminated together by a plurality of layers of copper foils. The protective sheet 50 is respectively added to the first positive tab 12, the second positive tab 22, the first negative tab 13, and the second negative tab 23, so that left and right positions of the protective sheet 50 are centered. The first positive tab 12, the second positive tab 22, the first negative tab 13, and the second negative tab 23 are respectively pre-welded into a whole through ultrasonic welding, and a pre-welded region 51 with ultrasonic welding is located in the center of the protective sheet 50, as shown in FIG. 1.

As shown in FIG. 2, the plate-like body 402 of the terminal 40 is a platform structure. The platform is slightly higher than a side surface of the cover plate 30. The first pole core 10 and second pole core 20 that are pre-welded are respectively located on two sides of the cover plate 30 along a width direction of the cover plate 30. The first positive tab 12 and the first negative tab 13 are distributed along a length direction of the cover plate 30, and the second positive tab 22 and the second negative tab 23 are also distributed along the length direction of the cover plate 30. The first positive tab 12 and the second positive tab 22 are aligned along a center line of a length direction of the cover plate 30, the first negative tab 13 and the second negative tab 23 are aligned along the center line of the length direction of the cover plate 30, and the protective sheet 50 is at a certain distance from a platform edge of the terminal 40.

The first positive tab 12 and the second positive tab 22 are disposed at an interval of a specified distance on two sides of a center line of the plate-like body 402 of the positive terminal 41, and the first negative tab 13 and the second negative tab 23 are disposed at an interval of a specified distance on two sides of a center line of the plate-like body 402 of the negative terminal 42. The pre-welded first tab 11 and second tab 21 are directly connected to the plate-like body 402 of the terminal 40 on the cover plate 30 through laser welding. A position in which the laser welding is performed is on the pre-welded region 51 through ultrasonic pre-welding. In this way, the connection of the first tab 11 and the second tab 21 to the cover plate 30 can be ensured to be firm.

Subsequently, the first tab 11 and the second tab 21 are bent, so that the first tab 10 and the second tab 20 are combined together to form the battery 100. As shown in FIG. 3, the battery 100 is assembled.

The battery pack according to the embodiment of the present disclosure includes the battery 100 according to the embodiment of the present disclosure. Since the battery 100 according to the embodiment of the present disclosure has the foregoing beneficial technical effect, the battery pack according to the embodiment of the present disclosure also has the corresponding technical effect, which can meet more use requirements, so that the battery has a smaller volume and stronger practicability, and the connecting piece structure can also be omitted. The connection structure is firmer, and the assembly process is simpler, so that production costs are reduced, and the internal resistance is reduced, facilitating improvement of the market competitiveness.

The electric vehicle according to the embodiments of the present disclosure includes the battery pack according to the embodiment of the present disclosure. Since the battery pack according to the embodiment of the present disclosure has the foregoing beneficial technical effect, the electric vehicle according to the embodiment of the present disclosure also has the corresponding technical effect, which can meet more use requirements, so that the battery has a smaller volume and stronger practicability, and the connecting piece structure can also be omitted. The connection structure is firmer, and the assembly process is simpler, so that production costs are reduced, and the internal resistance is reduced, facilitating improvement of the market competitiveness.

Other configurations and operations of the battery 100, the battery pack, and the electric vehicle according to the embodiments of the present disclosure are known to those of ordinary skill in the art, and are not described in detail herein again.

In the description of the present disclosure, it should be noted that unless otherwise explicitly specified or defined, the terms such as "mount", "install", "connect", and "connection" should be understood in a broad sense. For example, the connection may be a fixed connection, a detachable connection, or an integral connection; or the connection may be a mechanical connection or an electrical connection; or the connection may be a direct connection, an indirect connection through an intermediary, or internal communication between two components. Persons of ordinary skill in the art may understand the specific meanings of the foregoing terms in the present disclosure according to specific situations.

In description of the present disclosure, description of reference terms such as "an embodiment", "specific embodiments", or "an example", means including specific features, structures, materials, or features described in the embodiment or example in at least one embodiment or example of the present disclosure. In this specification, schematic descriptions of the foregoing terms do not necessarily directed at a same embodiment or example. Moreover, the specific features, structures, materials, or characteristics described may be combined with each other in any one or more embodiments or examples in an appropriate manner without interference or contradiction.

## Claims

1. A battery, comprising:
a housing;
a cover plate located at an end of the housing; the cover plate having a first side region and a second side region arranged in a lateral direction or a longitudinal direction of the cover plate;
a terminal disposed on the cover plate, a part of the terminal being located in the first side region, and another part being located in the second side region;
a first pole core located in the housing, the first pole core corresponding to a position of the first side region, the first pole core having a first tab, and at least one part of the first tab extending in a direction from the first side region to the second side region and being connected to at least one part of the terminal; and
a second pole core located in the housing, the second pole core corresponding to a position of the second side region, the second pole core having a second tab, and at least one part of the second tab extending in a direction from the second side region to the first side region and being connected to at least another part of the terminal.

2. The battery according to claim 1, wherein the terminal comprises:
a plate-like body disposed on a surface that is of the cover plate and that faces the first pole core and the second pole core, one part of the plate-like body being located in the first side region, another part being located in the second side region, the first tab being connected to at least one part of the plate-like body, and the second tab being connected to at least another part of the plate-like body; and
a columnar body connected to the plate-like body and passing through the cover plate to protrude from a surface that is of the cover plate and that faces away from the first pole core and the second pole core.

3. The battery according to claim 2, wherein the first side region and the second side region are arranged along the lateral direction of the cover plate and are delimited by a lateral center line of the cover plate, and the plate-like body is evenly distributed in the first side region and the second side region.

4. The battery according to claim 2 or 3, wherein a surface that is of the plate-like body and that faces the first pole core and the second pole core constitutes a mounting plane, at least one part of the first tab being parallel to the mounting plane and connected to the mounting plane, and at least one part of the second tab being parallel to the mounting plane and connected to the mounting plane.

5. The battery according to claim 4, wherein the first tab comprises:
a first connecting portion extending from the first pole core in a direction away from the second pole core;
a first bending portion connected to the first connecting portion and bending in a direction of the second pole core; and
a first mounting portion connected to the first bending portion and extending in the direction of the second pole core, the first mounting portion being parallel to the mounting plane and connected to the mounting plane.

6. The battery according to claim 4 or 5, wherein the second tab comprises:
a second connecting portion extending from the second pole core in a direction away from the first pole core;
a second bending portion connected to the second connecting portion and bending in a direction of the first pole core; and
a second mounting portion connected to the second bending portion and extending in the direction of the first pole core, the second mounting portion being parallel to the mounting plane and connected to the mounting plane.

7. The battery according to any of claims 1 to 6, wherein the at least one part of the first tab and the at least one part of the second tab are arranged integrally, at intervals, against each other, or in an overlapped manner.

8. The battery according to any of claims 1 to 7, wherein the at least one part of the first tab and the terminal are connected in any of manners such as laser welding, ultrasonic welding, and riveting.

9. The battery according to any of claims 1 to 8, wherein the at least one part of the second tab and the terminal are connected in any of manners such as laser welding, ultrasonic welding, and riveting.

10. The battery according to any of claims 1 to 9, wherein the first pole core has two first tabs disposed at intervals along a length direction of the first pole core: a first positive tab and a first negative tab, the second pole core has two second tabs disposed at intervals along a length direction of the second pole core: a second positive tab and a second negative tab, and there are two terminals: a positive terminal and a negative terminal, the first positive tab and the second positive tab being connected to the positive terminal, and the first negative tab and the second negative tab being connected to the negative terminal.

11. A battery pack, comprising: the battery according to any of claims 1 to 10.

12. An electric vehicle, comprising: the battery pack according to claim 11.
